# EUROPÄISCHE PATENTSCHRIFT

(11) **EP 1 513 643 B1**
(45) Veröffentlichungstag und Bekanntmachung des Hinweises auf die Patenterteilung: **30.08.2006**
(21) Anmeldenummer: 03752658.9
(22) Anmeldetag: 25.03.2003
(51) Int. Cl.: B23C 5/10, B23B 27/00, B23B 31/11

(54) **BEARBEITUNGSWERKZEUG, INSBESONDERE FR SWERKZEUG**
MACHINING TOOL, ESPECIALLY A MILLING TOOL
OUTIL D'USINAGE, NOTAMMENT OUTIL DE FRAISAGE

(30) Priorität: 22.05.2002 DE 10222446
(43) Veröffentlichungstag der Anmeldung: 16.03.2005
(73) Patentinhaber: HARTMETALL-WERKZEUGFABRIK PAUL HORN GMBH, 72072 Tübingen (DE)
(72) Erfinder: SCHÄFER, Hans, 72810 Gomaringen (DE); OETTLE, Matthias, 72585 Riederich (DE)
(74) Vertreter: Bartels & Partner
(86) Internationale Anmeldenummer: PCT/EP2003/003078
(87) Internationale Veröffentlichungsnummer: WO 2003/097282

(56) Entgegenhaltungen:
- WO-A-01/87523
- WO-A-02/05990
- DE-A- 3 402 547

## Beschreibung

Die Erfindung bezieht sich auf ein Bearbeitungswerkzeug, insbesondere Fräswerkzeug, mit einer Schneidplatte und einem schaftartigen, eine Längsachse definierenden Halter gemäß den Merkmalen des Oberbegriffes des Patentanspruches 1.

Bearbeitungswerkzeuge dieser Art sind bekannt. Die DE 34 48 086 C2 zeigt ein Werkzeug dieser Art, das eine Schneide aufweist und für die Innenbearbeitung eines rotierenden Werkstückes vorgesehen ist. Die auf die Schneidplatte wirkende Schnittkraft erzeugt, bezogen auf die Längsachse des schaftartigen Halters, ein Bearbeitungsdrehmoment, das über die Mitnehmerflächen zwischen Halter und Schneidplatte zu übertragen ist. Wenn es sich um ein rotierendes Bearbeitungswerkzeug handelt, beispielsweise ein Fräswerkzeug, bei dem der schaftartige Halter mit einer Antriebsspindel verbunden ist, wird das schnittkrafterzeugende Bearbeitungsdrehmoment vom schaftartigen Halter über die Mitnehmerflächen auf die Schneidplatte übertragen.

Bearbeitungswerkzeuge dieser Art werden vielfach für mit hoher Genauigkeit auszuführende Bearbeitungsvorgänge benutzt. Um die Einhaltung geforderter enger Toleranzen und eine hohe Güte der bearbeiteten Flächen sicherzustellen ist eine sichere und genau definierte Positionierung der Schneidplatte am Sitz des Halters von ausschlaggebender Bedeutung. Im Hinblick hierauf muß bei der Herstellung besonderes Augenmerk auf höchste Genauigkeit der Geometrie der an den Mitnehmerflächen und Abstützflächen anliegenden Bereiche der Schneidplatte geachtet werden. Dies führt wegen der Materialeigenschaften der Schneidplatten zu hohen Herstellungskosten, weil die die Hartmetall-Schneidplatten bildenden, gesinterten Rohlinge schwierig zu bearbeiten sind.

Durch die WO 01/87523 A1 ist ein Bearbeitungswerkzeug bekannt mit einer polygonförmigen Ausnehmung im Halter, wobei die vieteckigen, nutförmigen Ausnehmungen konvex gekrümmte Bahnflächen aufweisen. Ein an der Schneidplatte korrespondierend vorspringendes Polygon ist für den Eingriff in die polygonförmige Ausnehmung im Halter vorgesehen und dergestalt läßt sich über eine übliche Schraubverbindung die Schneidplatte an dem Halter festlegen. Durch das Bearbeitungswerkzeug ist es darüber hinaus bekannt, im Sinne der kennzeichnenden Merkmale des Patentanspruches 1 die Mitnehmerflächen und die Abstützflächen der korrespondierend ausgebildeten Polygonzüge durch begrenzte Teilflächen der Seitenwände der Nuten zu bilden, deren übrige Flächen gegenüber diesen Teilflächen zur Bildung eines Abstandes zwischen den Rippen und den Wänden der Nuten zurückgenommen sind (vgl. Fig.9 der WO 01/87523 A1).

Ausgehend von dem genannten Stand der Technik liegt der Erfindung die Aufgabe zugrunde, die Kupplung zwischen dem Halter und der Schneidplatte zu verbessern. Eine dahingehende Aufgabe löst ein Bearbeitungswerkzeug mit den Merkmalen des Patentanspruches 1 in seiner Gesamtheit.

Bei einem Bearbeitungswerkzeug der eingangs genannten Art ist diese Aufgabe erfindungsgemäß dadurch gelöst, dass die Mitnehmerflächen und die Abstützflächen durch begrenzte Teilflächen der Seitenwände der Nuten gebildet sind, deren übrige Flächen gegenüber diesen Teilflächen zur Bildung eines Abstandes zwischen den Rippen und den Wänden der Nuten zurückgenommen sind, und dass sämtliche Teilflächen durch rippenartig vorstehende Wandteile gebildet sind, die einander fluchtend gegenüberliegend an beiden Seitenwänden der Nuten des Sitzes des Halters vorgesehen sind.

Hierdurch wird erfindungsgemäß erreicht, dass lediglich Teilflächen an den Seitenwänden die Nuten des Sitzes des Halters die Tragbereiche bilden, an denen die Schneidplatte am Sitz positioniert und durch eine Befestigungsschraube fixiert wird, wodurch die Herstellung vereinfacht ist, weil im Unterschied zur vollflächigen Anlage zwischen den Rippen der Schneidplatte und den Nuten des Sitzes des Halters lediglich tragende Flächenbereiche entsprechend eng toleriert sein müssen. Mit anderen Worten gesagt, wird die Genauigkeit der Positionierung der Schneidplatte am Sitz durch außerhalb der begrenzten Tragbereiche gegebenenfalls auftretende Oberflächenfehler nicht gestört, falls solche an den außerhalb der Tragbereiche liegenden, zurückgenommenen Flächen vorhanden sein sollten. Die die Mitnehmerflächen und die Abstützflächen bildenden Teilflächen der Nuten des Sitzes sind so dimensioniert, dass die Anlage an den Flanken der Rippen der Schneidplatte im wesentlichen lediglich in einer Linienberührung erfolgt, und zwar vorzugsweise an den radial außen liegenden Bereichen der Rippen, also in einem entsprechend großen radialen Abstand von der Längsachse des Werkzeuges, so dass ein entsprechender Achsabstand für die Übertragung des durch die Wirkung der Schnittkraft hervorgerufenen Bearbeitungsdrehmomentes gegeben ist. Altemativ oder zusätzlich hierzu kann die Anordnung so getroffen sein, daß die Seitenwände der Nuten vom äußeren Ende zu den der Längsachse benachbarten inneren Ende hin einen leicht auseinanderstrebenden Verlauf besitzen, so daß die lichte Weite zwischen den Seitenwänden im radial inneren Bereich größer als im äußeren Bereich der Nuten und größer ist als die jeweils korrespondierende Breite der Rippen der Schneidplatte. Bei solcher Ausgestaltung bilden die in engerem Abstand von einander befindlichen äußeren Endbereiche der Nuten jeweils die als Tragbereiche dienenden Teilflächen, gegenüber denen die radial weiter innen liegenden Bereiche der Wände der Nuten aufgrund des auseinanderstrebenden oder leicht divergierenden Verlaufes von den Seitenflanken der Rippen der Schrieidplatte zurückgenommen sind.

Bei besonders bevorzugten Ausführungsbeispielen sind sowohl rippenartig vorstehende Wandteile am äußeren Endbereich der Nuten als tragende Teilflächen vorgesehen, als auch ein vom Tragbereich radial nach innen leicht auseinanderstrebender Verlauf der Seitenwände in den Nuten.

Vorzugsweise sind Geometrie und Dimensionierung der Flanken der Rippen der Schneidplatte und der die Tragbereiche bildenden Teilflächen der Nuten des Sitzes des Halters so gewählt, daß bei Anlage der Schneidplatte am Sitz des Halters ein Zwischenraum zwischen der Endfläche der Schneidplatte und der zugewandten Stirnfläche des Sitzes des Halters gegeben ist, so daß ggf. vorhandene Oberflächenfehler an den außerhalb der Tragbereiche liegenden Flächen der Schneidplatte und des Sitzes des Halters unerheblich sind.

Um die Gefahr zu verringern, daß im Betrieb eine Verschmutzung des Zwischenraumes durch eindringende Bearbeitungsrückstände erfolgt, kann ein am Umfang des Sitzes des Halters aus dessen Stirnfläche axial geringfügig vorspringender Rand eine umfängliche, örtliche Verkleinerung des Zwischenraumes zwischen Endfläche der Schneidplatte und zugewandter Stirnfläche des Sitzes des Halters bilden.

Nachstehend ist die Erfindung anhand eine in der Zeichnung dargestellten Ausführungsbeispieles im einzelnen erläutert. Es zeigen:
- Fig. 1: eine Seitenansicht eines Ausführungsbeispieles des erfindungsgemäßen Bearbeitungswerzeuges in Form eines Fräswerkzeuges;
- Fig. 2: eine gegenüber Fig. 1 in größerem Maßstab, perspektivisch und abgebrochen gezeichnete Ansicht des vorderen Endbereiches des Ausführungsbeispieles mit vom Sitz des Halters abgehobener Schneidplatte, wobei die die Schneidplatte axial am Sitz sichernde, zentrale Befestigungsschraube weggelassen i st;
- Fig. 3: eine der Fig. 2 ähnliche perspektivische Ansicht, jedoch mit Blick auf die dem Sitz des Halters zugewandte Endfläche der Schneidplatte;
- Fig. 4: eine gegenüber Fig. 2 und 3 noch stärker vergrößerte Draufsicht nur des Sitzes des Halters des Ausführungsbeispieles und
- Fig. 5: eine stark vergrößerte Darstellung des in Fig. 1 mit V bezeichneten Ausschnittes.

Die Erfindung wird anhand eines Ausführungsbeispieles erläutert, bei dem es sich um ein Bearbeitungswerkzeug in Form eines Fräswerkzeuges handelt, dessen Schneidplatte 1 vier Schneiden 3 aufweist, die von einem im Umriß kreisrunden, zentralen Körper 5 radial vorstehen. Der Körper 5 weist eine zentrale Bohrung 7 für eine nicht dargestellte Befestigungsschraube auf, mit der die Schneidplatte 1 an einem Sitz 9 fixierbar ist, der am stirnseitigen Ende eines fräserschaftartigen Halters 11 mit einer Längsachse 13 ausgebildet ist. Der Sitz 9 weist eine zur Längsachse 13 koaxiale Gewindebohrung 15 für die nicht dargestellte Befestigungsschraube zur Fixierung der Schneidplatte 1 auf. Diese Befestigungsschraube weist einen Konusabschnitt auf, der in Zusammenwirkung mit einer in der Nähe des äußeren Endbereiches der Bohrung 7 befindlichen Kegelfläche 17, die die Bohrung 7 nach außen hin erweitert, zur Zentrierung der Schneidplatte 1 am Sitz 9 des Halters 11 beiträgt.

Anstelle des dargestellten Ausführungsbeispieles in Form eines rotierenden Fräswerkzeuges, könnte die Erfindung auch in Form eines nicht rotierenden Bearbeitungswerkzeuges verwirklicht werden, das beispielsweise zur Innenbearbeitung eines rotierenden Werkstückes dient, wobei die Schneidplatte beispielsweise mit nur einer Schneide versehen wäre. In beiden Fällen ist in Zusammenwirkung zwischen Sitz 9 des Halters 11 und Schneidplatte 1 ein um die Längsachse 9 wirkendes Bearbeitungsdrehmoment zu übertragen.

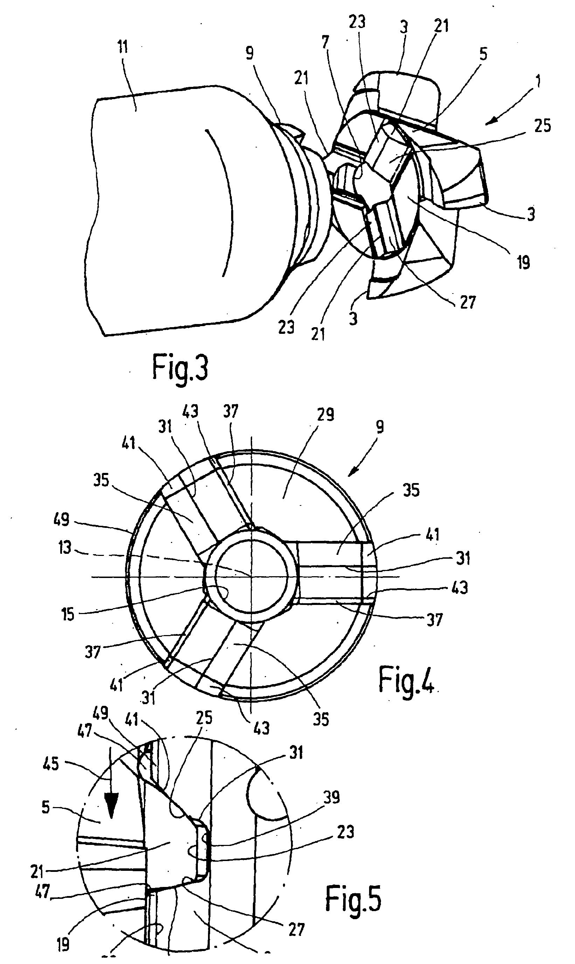

Für die axiale Positionierung und die Drehmomentübertragung bildet die Schneidplatte 1 an ihrer dem Halter 11 zugewandten Endfläche 19 (Fig. 3) einen Kupplungsteil mit drei axial vorspringenden Rippen 21, die sich, gleiche Zentriwinkel miteinander einschließend, in Radialrichtung von der zentralen Bohrung 7 bis zum Umfang der Endfläche 19 am Körper 5 der Schneidplatte 1 erstrecken. Wie insbesondere aus Fig. 3 ersichtlich ist, weisen die Rippen 21 jeweils zur ebenen Gipfelfläche 23 schräg abfallende Seitenflanken 25 und 27 auf (siehe Fig. 3 und 5), wobei die Neigung der Flanken 25 und 27 unterschiedlich ist und die Neigung der Flanke 27 steiler ist als diejenige der Flanke 25.

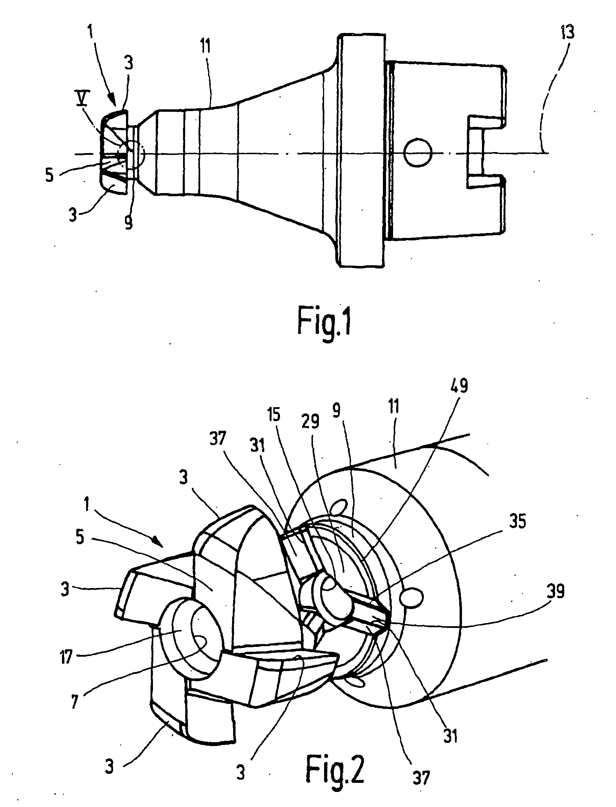

Der Sitz 9 des Halters 11 weist in seiner Stirnfläche 29, die in einer zur Achse 13 normalen Radialebene liegt, drei zu den Rippen 21 komplementäre, in die Stirnfläche 29 eingearbeiteten Nuten 31 auf, deren Seitenwände mit 35 bzw. 37 bezeichnet sind. Die Neigung der Seitenwände 35 und 37 entspricht der Neigung der Flanken 25 bzw. 27 der Rippen 21 der Schneidplatte 1. Der ebene Nutgrund der Nuten 31 ist mit 39 bezeichnet, siehe Fig. 2 und 5.

Wie aus Fig. 4 entnehmbar ist, sind die Nuten 31 in ihrem radial innenliegenden Endbereich ganz geringfügig weiter als an ihrem, bezogen auf die Achse 13, radial außenliegenden Ende. Im Bereich dieses äußeren Endes befindet sich an jeder Seitenwand 35 und 37 ein rippenartig geringfügig vorspringender Wandteil 41 bzw. 43, die miteinander fluchten und eine örtliche, weitere, geringfügige Verengung der Nuten 31 bilden. Diese Teilflächen, gebildet durch die Wandteile 41 und 43, gegenüber denen die übrigen Flächen der Seitenwände 35 und 37 zurückgenommen sind, bilden die einzigen Tragbereiche des Sitzes 9, mit denen Teile der Rippen 21 der Schneidplatte 1 in Anlage kommen. Wie insbesondere aus Fig. 5 entnehmbar ist, die das radial außenliegende Ende einer Nut 31 und das entsprechende äußere Ende einer Rippe 21 in Eingriff miteinander zeigt, liegt die Seitenflanke 27 der Rippe 21 am vorspringenden Wandteil 43 an, und die Flanke 25 der Rippe 21 liegt am vorspringenden Wandteil 41 der Nut 31 an. Zwischen Nutgrund 39 und Gipfelfläche 23 der Rippe 21 befindet sich ein Abstand.

Bei der Seitenflanke 27 handelt es sich um die stärker geneigte Flanke der Rippe 21. Die an der Flanke 27 anliegende Fläche des Wandteiles 43 bildet eine Mitnehmerfläche für die Übertragung des durch die Schnittkraff (siehe Pfeil 45) bewirkten Bearbeitungsdrehmomentes. Der gegenüberliegende vorspringende Wandteil 41 der Nut 31 bildet die als zusätzliche Abstützfläche dienende, zum Tragbereich gehörende Teilfläche.

Durch den radial nach innen auseinanderstrebenden Verlauf der Seitenwände 35 und 37 der Nuten 31 sind die restlichen Seitenwandteile der Nuten 31 gegenüber den Flanken 25 und 27 der Rippen 21 noch weiter zurückgenommen.

Wie am deutlichsten aus Fig. 5 zu ersehen ist, befindet sich zwischen der Endfläche 19 am Körper 5 und der Stirnfläche 29 am Sitz 9 ein Zwischenraum 47, wenn die Seitenflanken 25 und 27 am Tragbereich der Nuten 31 anliegen. Ein axial geringfügig vorspringender Rand 49, der die Stirnfläche 29 des Sitzes am Umfang umringt, bildet eine örtliche Verkleinerung des Zwischenraumes als Schutz gegen eindringenden Schmutz.

Anstelle der durch die vorspringenden Wandteile 41 und 43 gebildeten tragenden Teilflächen der Nuten 31, von denen die Wandteile 43 Mitnehmerflächen und die Wandteile 41 Abstützflächen für die Rippen 21 bilden, könnten andersartige Gestaltungen der Seitenwände 35 und 37 der Nuten 31 die begrenzten Teilflächen bilden, welche als ausschließliche Tragbereiche dienen. So könnte die Bildung begrenzter, die Tagbereiche definierender Teilflächen durch die auseinanderstrebende Gestaltung der Seitenwände der Nuten allein, d.h. ohne vorspringende Wandteile 41 und 43, verwirklicht sein.

## Patentansprüche

1. Bearbeitungswerkzeug, insbesondere Fräswerkzeug, mit einer Schneidplatte (1) und einem schaftartigen, eine Längsachse (13) definierenden Halter (11), an dessen Stirnseite ein Sitz (9) für eine am Halter (11) anbringbare Schneidplatte (1) vorgesehen ist, die zumindest eine von einem zentralen Körper (5) derselben radial vorstehende Schneide (3) aufweist, welcher eine zur Längsachse (13) koaxiale Bohrung (7) für eine die Schneidplatte (1) am Sitz (9) des Halters (11) axial sichernde Befestigungsschraube und einen für die Lagerung am Sitz (9) des Halters (11) dienenden Kupplungsteil mit drei aus der dem Halter (11) zugekehrten Endfläche (19) des Körpers (5) axial vorstehenden und sich radial erstreckenden Rippen (21) aufweist, die für den Eingriff in komplementär ausgebildete Nuten (31) am Sitz (9) des Halters (11) vorgesehen sind, deren Seitenwände (37 bzw. 35) Mitnehmerflächen und Abstützflächen bilden, die zur Übertragung eines Bearbeitungsdrehmomentes bzw. zur axialen Lagesicherung mit zugeordneten Flächen der Flanken (27 bzw. 25) der Rippen (21) zusammenwirken, **dadurch gekennzeichnet, dass** die Mitnehmerflächen und die Abstützflächen durch begrenzte Teilflächen (43 und 41) der Seitenwände (37 bzw. 35) der Nuten (31) gebildet sind, deren übrige Flächen gegenüber diesen Teilflächen (43 und 41) zur Bildung eines Abstandes zwischen den Rippen (21) und den Wänden der Nuten (31) zurückgenommen sind, und dass sämtliche Teilflächen durch rippenartig vorstehende Wandteile (41,43) gebildet sind, die einander fluchtend gegenüberliegend an beiden Seitenwänden (35,37) der Nuten (31) des Sitzes (9) des Halters (11) vorgesehen sind.

2. Bearbeitungswerkzeug nach Anspruch 1, **dadurch gekennzeichnet, dass** die die Minehmerflächen und die Abstützflächen bildenden Teilflächen (43,41) der Nuten (31) am Sitz (9) des Halters (11) für die im wesentlichen in Linienberührung erfolgende Anlage an den radial außenliegenden Endbereichen der Rippen (21) der Schneidplatte (1) in einem entsprechenden radialen Abstand von der Längsachse (13) vorgesehen sind.

3. Bearbeitungswerkzeug nach Anspruch 1 oder 2, **dadurch gekennzeichnet, dass** die Seitenwände (35,37) der Nuten (31) vom äußeren Ende zu dem der Längsachse (13) benachbarten inneren Ende hin einen leicht auseinanderstrebenden Verlauf besitzen, so dass die lichte Weite zwischen den Seitenwänden (35,37) im radial inneren Bereich größer als im äußeren Bereich der Nuten (31) und größer ist als die jeweils korrespondierende Breite der Rippen (21) der Schneidplatte (1).

4. Bearbeitungswerkzeug nach einem der Ansprüche 1 bis 3, **gekennzeichnet durch** einen bei Anlage der Flanken (25,27) der Rippen der Schneidplatte (1) an den zugeordneten Teilflächen (41,43) der Nuten (31) des Halters (11) gebildeten Zwischenraum (47) zwischen der Endfläche (19) der Schneidplatte (1) und der zugewandten Stirnfläche (29) des Sitzes (9) des Halters (11).

5. Bearbeitungswerkzeug nach Anspruch 4, **gekennzeichnet durch** einen am Umfang des Sitzes (9) des Halters (11) aus dessen Stirnfläche (29) axial geringfügig vorspringenden Rand (49), der eine umfängliche, örtliche Verkleinerung des Zwischenraumes (47) zwischen Endfläche (19) der Schneidplatte (1) und zugewandter Stirnfläche (29) des Sitzes (9) des Halters (11) bildet.

6. Bearbeitungswerkzeug nach einem der Ansprüche 1 bis 5, **dadurch gekennzeichnet, dass** die Flanken (25,27) der Rippen (21) der Schneidplatte (1) und die Seitenwände (35,37) der Nuten (31) des Halters (11) relativ zur Normalebene zur Längsachse (13) einen unterschiedlich stark geneigten Verlauf besitzen und dass die Neigung an der die Mitnehmerfläche für die Übertragung des Bearbeitungsdrehmomentes bildenden Seite steiler ist als an der die Abstützfläche bildenden Seite.

## Claims

1. Processing tool, especially milling tool, with a knife plate (1) and a shaft-like holder (11) defining a longitudinal axis (13), on the facing side of which a seat (9) is envisaged for a knife plate (1) to be affixed to the holder (11), comprising at least one blade (3) radially projecting from a central body (5) of the same, comprising a bore (7) that extends coaxially in relation to the longitudinal axis (13) for a fitting screw axially securing the knife plate (1) on the seat (9) of the holder (11), and a coupling part serving to position the same on the seat (9) of the holder (11), with three radially extending ribs (21) projecting axially from the end surface (19) of the body (5) facing the holder (11), the same being envisaged for engaging complimentary grooves (31) on the seat (9) of the holder (11), the side surfaces (37, i.e. 35) of which form follower surfaces and supporting surfaces that co-operate to transmit a processing torque, i.e. co-operate with associated surfaces of the flanks (27, i.e. 25) of the ribs (21) for an axial securing of the position, **characterised in that** the follower surfaces and the supporting surfaces are formed by delimiting part surfaces (43 and 41) of the side walls (37, i.e. 35) of the grooves (31), the remaining surfaces of which are set back from these part surfaces (43 and 41) to form a gap between the ribs (21) and the walls of the grooves (31), and **in that** all part surfaces are formed by rib-like projecting wall parts (41, 43) which oppose each other and are envisaged flush on both side walls (35, 37) of the grooves (31) in the seat (9) of the holder (11).

2. Processing tool according to Claim 1, **characterised in that** the part surfaces (43, 41) of the grooves (31) in the seat (9) of the holder (11) forming the follower surfaces and the supporting surfaces for the abutment occurring substantially in the form of line contact are envisaged in the radial outer end areas of the ribs (21) of the knife plate (1) at a corresponding radial distance from the longitudinal axis (13).

3. Processing tool according to Claim 1 or 2, **characterised in that** the side walls (35, 37) of the grooves (31) extend along a slightly expanding path from the outer end towards the inner end adjacent to the longitudinal axis (13), so that the clear width between the side walls (35, 37) in the radial inner area is greater than that in the outer area of the grooves (31), and greater than the relevant corresponding width of the ribs (21) of the knife plate (1).

4. Processing tool according to one of the Claims 1 to 3, **characterised by** a space (47) between the end surface (19) of the knife plate (1) and the facing side (29) of the seat (9) of the holder (11) formed by an abutment of the flanks (25, 27) of the ribs of the knife plate (1) against the associated part surfaces (41, 43) of the grooves (31) of the holder (11).

5. Processing tool according to Claim 4, **characterised by** an axial edge (49) projecting slightly from the facing side (29) of the circumference of the seat (9) of the holder (11), the same forming a circumferential, local narrowing of the space (47) between the end surface (19) of the knife plate (1) and the facing side (29) of the seat (9) of the holder (11).

6. Processing tool according to one of the Claims 1 to 5, **characterised in that** the flanks (25, 27) of the ribs (21) of the knife plate (1) and the side walls (35, 37) of the grooves (31) of the holder (11) extend along a strongly inclined path in relation to the normal plane of the longitudinal axis (13), and **in that** the incline is steeper on the side forming the follower surface for the transmission of the processing torque than on the side forming the supporting surface.

## Revendications

1. Outil d'usinage, notamment outil de fraisage, comportant une plaquette (1) de coupe et un élément (11) porteur du genre tige, définissant un axe (13) longitudinal et sur le côté frontal duquel est prévu un siège (9) pour une plaquette (1) de coupe qui peut être installée sur l'élément (11) porteur et qui comporte au moins un tranchant (3) dépassant radialement d'un corps central (5) de la plaquette et ayant un perçage (7), coaxial à l'axe (13) longitudinal, pour une vis de fixation assujettissant axialement la plaquette (1) de coupe sur le siège (9) de l'élément (11) porteur, et une partie d'accouplement, servant au montage sur le siège (9) de l'élément (11) porteur et pourvue de trois nervures (21) s'étendant radialement et dépassant axialement de la surface (19) terminale du corps (5) tournée vers l'élément (11) porteur, nervures qui sont destinées à s'engager dans des rainures (31) de forme complémentaire prévues sur le siège (9) de l'élément (11) porteur, rainures dont les parois (respectivement 37, 35) latérales forment des surfaces entraîneuses et des surfaces de soutien, qui coopèrent avec des surfaces associées des flancs (respectivement 27, 25) des nervures (21) pour transmettre un couple d'usinage ou respectivement pour assujettir en position axiale, **caractérisé en ce que** les surfaces entraîneuses et les surfaces de soutien sont formées par des surfaces (43 et 41) partielles limitées des parois (37, 35) latérales des rainures (31), dont les autres surfaces sont en retrait par rapport à ces surfaces (43 et 41) partielles afin de former une distance entre les nervures (21) et les parois des rainures (31), et **en ce que** toutes les surfaces partielles sont formées par des parties (41, 43) de paroi dépassant à la manière de nervures, qui sont prévues en étant opposées en alignement mutuel sur les deux parois (35, 37) latérales des rainures (31) du siège (9) de l'élément (11) porteur.

2. Outil d'usinage suivant la revendication 1, **caractérisé en ce que** les surfaces (43, 41) partielles, formant les surfaces entraîneuses et les surfaces de soutien, des rainures (31) prévues sur le siège (9) de l'élément (11) porteur sont prévues pour l'application, s'effectuant essentiellement par contact linéaire, contre les régions terminales radialement extérieures des nervures (21) de la plaquette (1) de coupe à une distance radiale correspondante de l'axe (13) longitudinal.

3. Outil d'usinage suivant la revendication 1 ou 2, **caractérisé en ce que** les parois (35, 37) latérales des rainures (31) possèdent un tracé légèrement divergent depuis l'extrémité extérieure en direction de l'extrémité intérieure voisine de l'axe (13) longitudinal, de sorte que l'écartement entre les parois (35, 37) latérales est plus grand dans la région radialement intérieure que dans la région extérieure des rainures (31), et est plus grand que la largeur correspondante respective des nervures (21) de la plaquette (1) de coupe.

4. Outil d'usinage suivant l'une des revendications 1 à 3, **caractérisé par** un espace (47) intermédiaire, entre la surface (19) terminale de la plaquette (1) de coupe et la surface (29) frontale du siège (9) de l'élément (11) porteur tournée vers cette surface (19) terminale, qui est formé lors de l'application des flancs (25, 27) des nervures de la plaquette (1) de coupe contre les surfaces (41, 43) partielles associées des rainures (31) de l'élément (11) porteur.

5. Outil d'usinage suivant la revendication 4, **caractérisé par** un bord (49) dépassant légèrement axialement de la surface (29) frontale du siège (9) de l'élément (11) porteur sur le pourtour du siège (9), bord qui forme une réduction circonférentielle locale de l'espace (47) intermédiaire entre la surface (19) terminale de la plaquette (1) de coupe et la surface (29) frontale du siège (9) de l'élément (11) porteur qui est tournée vers cette surface (19) terminale.

6. Outil d'usinage suivant l'une des revendications 1 à 5, **caractérisé en ce que** les flancs (25, 27) des nervures (21) de la plaquette (1) de coupe et les parois (35, 37) latérales des rainures (31) de l'élément (11) porteur possèdent une allure inclinée avec une ampleur différente par rapport au plan normal à l'axe (13) longitudinal, et **en ce que** l'inclinaison est plus raide sur le côté formant la surface entraîneuse pour la transmission du couple d'usinage que sur le côté formant la surface de soutien.
